# EUROPEAN PATENT SPECIFICATION

(11) **EP 4 067 831 B1**
(45) Date of publication and mention of the grant of the patent: **28.08.2024**
(21) Application number: 22164797.7
(22) Date of filing: 28.03.2022
(51) Int. Cl.: G01F 1/075

(54) **DETECTION DEVICE FOR DETECTING A FLOW OF LIQUID IN A HOUSEHOLD APPLIANCE**
GERÄT ZUR ERKENNUNG EINES FLÜSSIGKEITSFLUSSES IN EINEM HAUSHALTSGERÄT
DISPOSITIF DE DÉTECTION POUR DÉTECTER UN DEBIT DE LIQUIDE DANS UN APPAREIL ÉLECTROMÉNAGER

(30) Priority: 30.03.2021 IT 202100007790
(43) Date of publication of application: 05.10.2022
(73) Proprietor: ELBI International S.p.A., 10129 Torino (IT)
(72) Inventor: DA PONT, Paolo, 10129 TORINO (IT); MARONE, Giuseppe, 10042 Nichelino (TO) (IT)
(74) Representative: Vitillo, Giuseppe

(56) References cited:
- EP-A1- 2 166 316
- EP-A2- 1 980 826
- WO-A1-2011/067171
- WO-A1-2019/166954
- DE-U1- 29 614 076
- US-A- 5 939 644

## Description

### Technical field

The present invention relates to a detection device for detecting a flow of liquid in a household appliance.

### Technical background

In the field of household appliances, devices are known for detecting a flow of liquid.

Such detection devices are generally associated and/or integrated with fluid displacement pumps, often making use of flow meters. In particular, pumps are commonly used for delivering fluids, particularly in household appliances. A typical application of such pumps concerns the supply of water intended for alimentary use, e.g. for beverage-making machines, such as coffee-making machines. Some examples of such pumps are described in patent publications WO 2019/166954 A1, WO 2019/166955 A1 and WO 2019/166956 A1, all by the same Applicant. In such patent publications, the pumps are, advantageously, of the vibration type. Other typical applications in the field of household appliances in relation to vibration pumps concern steam production, e.g. for cooking ovens (the so-called "steam assist ovens") and for iron boilers.

US 5,939,644 A discloses a light induction flowmeter for a water purification system such as reverse osmosis in water vending machines includes a flowing device and a light induction unit. The flowing device has a propeller wheel which is driven to rotate by a flow of water and has a magnetic element. The light induction unit has an infrared beam emitting member, an infrared beam detector and a magnetic induction rotator. The magnetic induction rotator is driven by the rotating magnetic element of the propeller wheel to rotate and thus its rotation is in synchronization with the rotating movement of the propeller wheel of the flowing device. When the magnetic rotator rotates, it intermittently blocks off the path of the infrared beam emitted continuously by the infrared beam emitting member and the infrared beam detector receives intermittent infrared light The frequency of reception of such intermittent infrared light by the infrared beam detector is proportional to the flow rate. The infrared beam detector converts the intermittent infrared light into electrical signals and transmits them to an external electronic counter which can therefore records the accumulative quantity of flowing water.

WO 2011/067171 A1 discloses a flowmeter comprises a housing delimiting a measuring chamber. The housing is formed of a first body and second body that are assembled together by a bayonet connector having a number of pairs of interconnecting securing parts. The pairs of securing parts are arranged so that the first and second bodies are assemblable in only one position or in a number of different positions that is smaller than the number of pairs of interconnecting securing parts.

EP 2 166 316 A1 discloses a flow meter which has an inlet flow port tangentially formed at a cylindrical measuring housing in plastic injection molding. A sensor is provided at the housing for determining fluid amount flowing through the housing based on rotation of a wheel blower. An outlet flow port is centrally formed at a housing cover, and the inlet flow port encloses a nozzle tube forming a nozzle channel so that a fluid flows through the flow meter in a cyclonic manner, where the tube is inserted into the inlet flow port and opens corresponding to a direction of the inlet flow port.

EP 1 980 826 A2 discloses a flow meter which is intended for measuring a liquid flow for an automatic beverage preparing and dispensing apparatus, and comprises a measuring casing formed of a lower part with an inlet connection and an upper part with an outlet connection. Within the measuring casing a measuring body is rotatably supported for determining the liquid flow. The upper part and the lower part of the measuring casing are detachably interconnectable by a bayonet catch formed of a number of radially outwardly projecting hooks positioned on the periphery of the lower part and a corresponding number of locking receptacles positioned on the upper part of the measuring casing. The flow meter is provided with a radially outwardly projecting tooth positioned on the periphery of the lower part and with a corresponding slot formed on the upper part for engagement with the tooth, whereby the upper part is connectable to the lower part in only one position and orientation of the slot relative to the tooth.

DE 296 14 076 U1 discloses a liquid flow meter which is designed to accommodate a variety of different arrangements of the input and output lines. The input line enters the lower portion (3) of the housing tangentially. The lower portion of the housing consists of a cylindrical shape whose length is less than its diameter. It is connected to the upper portion of the housing by a bayonet lock which allows it to be fastened in four different positions, 90 degrees apart the upper portion may be disc shaped and of a greater diameter than the lower portion. The output line leaves the side of the upper portion just slightly offset from the centreline.

WO 2019/166954 A1 discloses another detection device of the prior art, for detecting a flow of liquid in a household appliance, said detection device being intended for being connected to and/or integrated with a pump.

Household appliances generally include a tank from which the pump draws water. Typically, during the operation of such pumps it is important to reliably and accurately monitor the water flow entering the vibration pump and, accordingly, to suitably and safely control said vibration pump and/or the household appliance it is associated with.

A problem which is encountered in the applications known in the prior art is that, in order to counter the pulsating water flow generated during the operation of the vibration pump, a flexible tube is generally used which is connected downstream of the detection device. However, this is disadvantageous because, in operation, an amount of stagnating water remains in the flexible tube until the vibration pump is activated again. Moreover, the overall dimensions are increased by the length of the tube incorporated into the system.

### Summary of the invention

It is one object of the present invention to provide a detection device which is improved over the prior art. In particular, when the device is used in combination with a pump, more specifically a vibration pump, the detection device is advantageously capable of effectively dampening the pulsating water flow generated by the reciprocating motion of the piston of such a pump.

According to the present invention, these and other objects are achieved through a detection device having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure **1** is a block diagram of a control system for a pump, in particular a vibration pump, made in accordance with an exemplary embodiment of the present invention.
Figure **2** is a perspective view of a detection device made in accordance with an exemplary embodiment of the present invention. The illustrated detection device is included in the control system shown in Figure **1****.**
Figures **3** and **4** are perspective views of the detection device shown in Figure **2****,** wherein such detection device is viewed from the rear and from the front, and wherein at least part of the casing has been removed to show internal elements and components.
Figure **5** is a side elevation sectional view of the detection device of the preceding figures; the section runs along the sectional lines V-V shown in Figures **2** and **6****.**
Figures **6** and **7** are front and rear elevation sectional views of the detection device shown in the preceding figures, wherein the sections run along the lines VI-VI and VII-VII, respectively, shown in Figure **5****.**
Figures **8** and **9** are partial elevation sectional views of the detection device shown in the preceding figures, wherein such sections run diametrically with respect to an axis of rotation of an impeller of the system.

### Detailed description of the invention

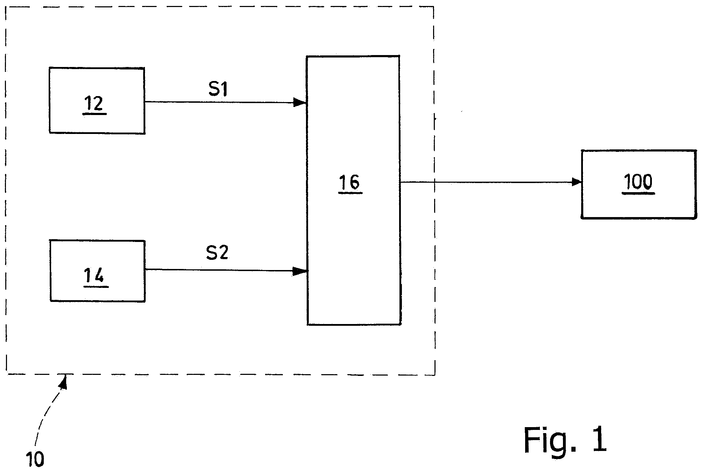

With particular reference to Figure **1****,** numeral **10** designates as a whole a detection device made in accordance with an exemplary embodiment of the present invention.

Detection device **10** is intended for detecting a flow of liquid in a household appliance. Also, detection device **10** is intended for installation on a pump, which is, advantageously but not necessarily, a vibration pump **100,** configured to deliver a flow of liquid (e.g. water) into the household appliance. In particular, vibration pump **100** is configured to deliver water into a beverage-making machine, such as a hot-beverage infusion machine. However, as will be apparent to a person skilled in the art, detection device **10** may also be used for applications other than beverage-making machines. By way of non-limiting example, detection device **10** is also applicable to steam-producing equipment, which can be used for cooking ovens (the so-called "steam assist ovens") and for iron boilers.

In other embodiments, however, detection device **10** may also be used in household appliances not using any pumps and hence not associable or integratable therewith. By way of non-limiting example, detection device **10** may also be used in water purifiers directly connected to the water mains, from which water under pressure is supplied, without a pump having necessarily to be employed.

Typically, the household appliance includes a tank intended to contain an amount of water that vibration pump **100** is configured to deliver in a controlled manner.

By way of non-limiting example, vibration pump **100** may be of the type described in patent publications WO 2019/166954 A1, WO 2019/166955 A1 and WO 2019/166956 A1 by the present Applicant. For brevity's sake, vibration pump **100** will not be described in detail herein.

As an alternative, the pump may be different from vibration pump **100** described and illustrated herein; for example, it may be a gear-type pump.

Detection device **10** comprises a flow meter **12** configured to be crossed by a flow of liquid, in particular a flow of water.

Preferably, detection device **10** comprises also a conductivity sensor **14** intended for being crossed by the above-mentioned flow of water. In the embodiment illustrated herein, such flow of water is directed towards the inlet of vibration pump **100.**

Preferably, a control unit **16** is also provided, which co-operates with flow meter **12** and conductivity sensor **14,** as will be described hereinafter.

Flow meter **12** is configured to, in particular by means of suitable detection means **26,** output a flow signal **S1** indicative of the rate of the flow of water. In particular, the water may come from the tank to which vibration pump 100 is connected.

Conductivity sensor **14** is configured to output a conductivity signal **S2** indicative of the electric conductivity of the flow of water.

Control unit **16** is configured to receive flow signal **S1** and conductivity signal **S2.** According to an exemplary embodiment, control unit **16** can communicate with a motherboard of the household appliance in which vibration pump **100** is installed, e.g. in order to transmit (processed) signals **S1** and **S2.**

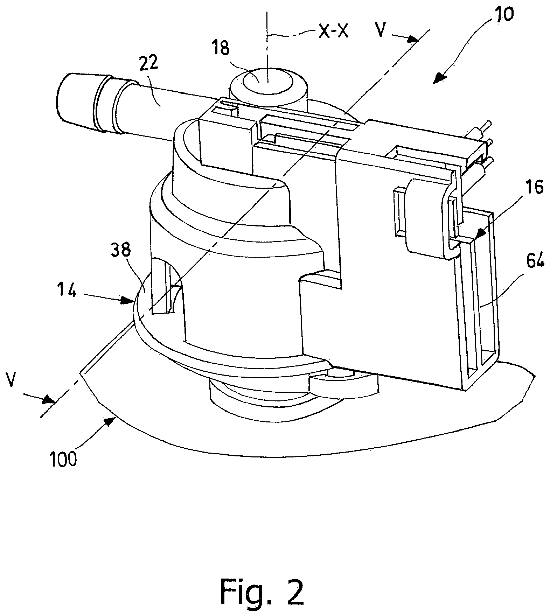

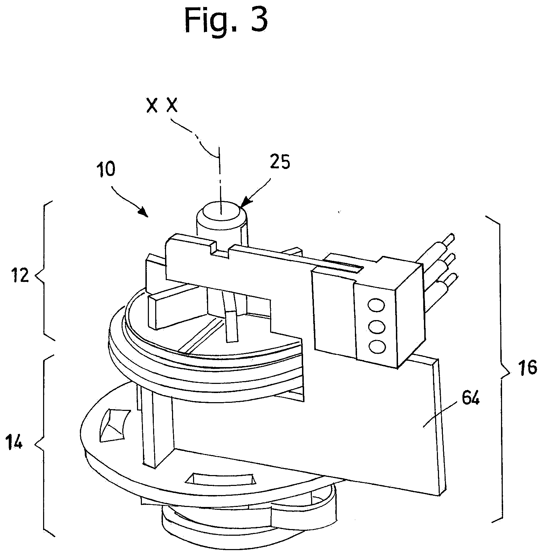

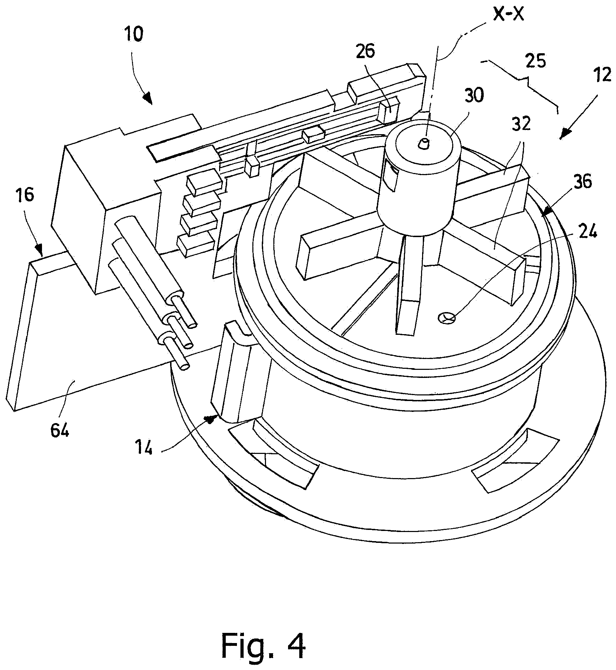

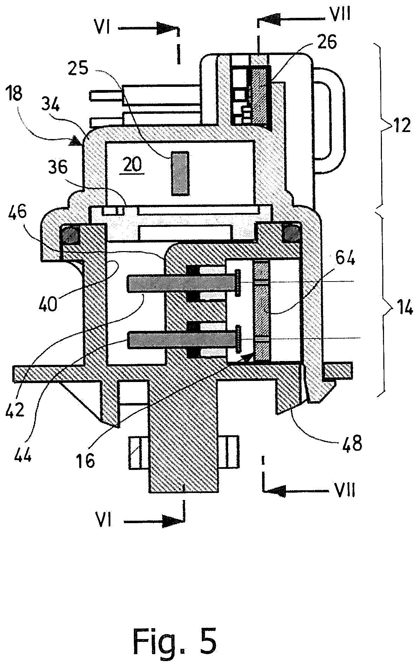

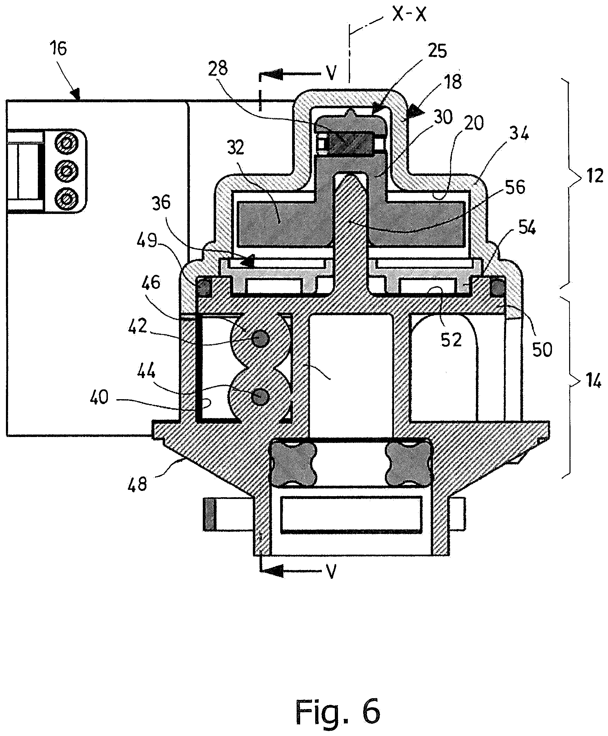

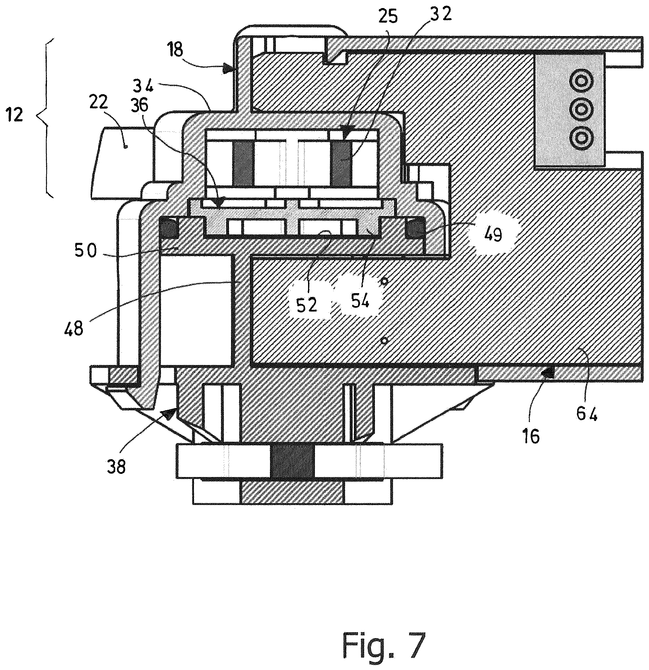

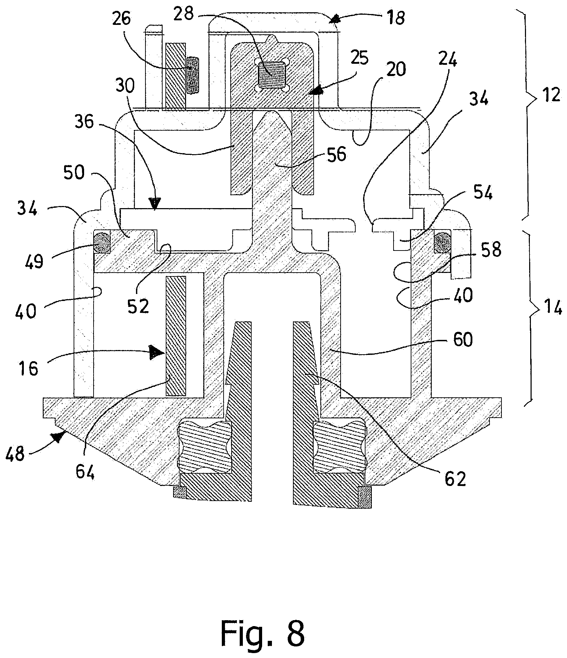

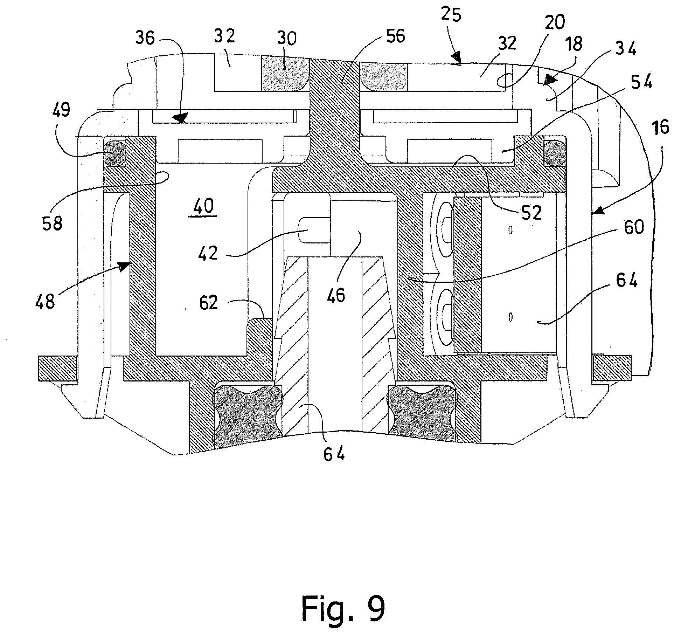

With particular reference to Figures **2** to **9****,** the following will describe in detail some preferred technical and structural features of detection device **10.**

The following description will first tackle the technical features of the structure of flow meter **12.**

In the embodiment illustrated herein, flow meter **12** comprises a hollow casing **18** having a cavity **20** configured to be crossed by a flow of water, in particular coming from a tank. Hollow casing **18** comprises an inlet **22,** intended for receiving the flow of water directed towards cavity **20,** and an outlet **24,** intended for letting the water flow out of cavity **20.** In the illustrated embodiment, outlet **24** opens in the vicinity of conductivity sensor **14.**

In the embodiment illustrated herein there are a single inlet **22** and a single outlet **24.** However, in further implementation variants a plurality of inlets and/or a plurality of outlets may be provided.

Flow meter **12** further comprises an impeller **25** situated in cavity **20** and rotatably supported by hollow casing **18** around an axis of rotation **X-X.** Impeller **25** is configured to be rotatably driven by the flow of water entering through inlet **22** and exiting through outlet **24.**

In addition, flow meter **12** comprises detection means **26** configured to detect the rotation of impeller **25** and output flow signal **S1** dependent on the revolution speed of impeller **25.**

Outlet **24** is radially spaced apart from the axis of rotation **X-X** of impeller **25.** Such structure and location of outlet **24** make it possible to dampen the pulsating water flow generated during the operation of vibration pump **100.** Due to the dampening attained because of the technical characteristics of outlet **24,** it is possible to avoid using a flexible tube that, in prior-art applications, is typically connected downstream of detection device **10.** This will prevent problems caused by the presence of stagnating water in the flexible tube following the activation of the vibration pump. Moreover, the absence of the flexible tube reduces the overall dimensions and the number of components, with the additional advantage of fewer hydraulic connections and of not having to provide fluid-tight seals for the flexible tube.

According to the present invention, inlet **22** may be located anywhere upstream of impeller **25,** and outlet **24** may be located anywhere downstream of impeller **25.**

Preferably, outlet **24** is oriented parallel to the axis of rotation **X-X.** Alternatively, outlet **24** may also be oriented perpendicular to the axis of rotation **X-X.**

In the embodiment illustrated herein merely by way of non-limiting example, inlet **22** and outlet **24** have respective circular-section ports for the water flow. According to such an embodiment, the ratio between the diameter defined by outlet **24** (in particular, its inside diameter) and the diameter defined by inlet **22** (in particular, its inside diameter) is preferably in the range of 0.6 to 1.4. In other words, the diameter of the hole defined by outlet **24** may be comprised within an interval ranging from a minimum value, equal to the diameter of inlet hole **22** reduced by 40%, and a maximum value, equal to the diameter of the outlet hole increased by 40%.

The following will provide more general indications, compared with the above diameter ratio recommendations, concerning a preferred range of values for the ratio between the areas of the inlet **22** and outlet **24** available for the water flow, regardless of the shape and total number of inlets and outlets. In this respect, the ratio between:
- the total area of the cross-section of outlet **24** relative to the axial direction of the water flow out of cavity **20,** and
- the total area of the cross-section of inlet **22** relative to the axial direction of the water flow into cavity **20** is in the range of 0.36 to 1.96.

Furthermore, always as a preferred embodiment, the ratio between the diameter of impeller **25,** in millimeters, and the number of blades is in the range of 2 to 3 (for example, if the diameter of impeller **25** is 20mm, the blades can be in the number of 9, the ratio above indicated being equal to **2,2̅.**

Impeller **25** further comprises a permanent magnet **28,** and detection means **26** are configured to detect the variation occurring in the magnetic field generated by permanent magnet **28,** so as to measure the rate of the flow of water through cavity **20** and output flow signal **S1.** In the illustrated embodiment, the magnetic poles of magnet **28** are oriented radially relative to the axis of rotation **X-X,** in particular being situated at diametrically opposite positions relative to the latter.

In particular, inlet **22** is oriented tangentially relative to the axis of rotation **X-X** of impeller **25.** Preferably, inlet **22** essentially consists of a tube entering supporting half-shell **34.**

In addition, impeller **25** comprises a central hub **30** from which a plurality of radial blades **32** extend, which are configured to intercept the water flow coming from inlet **22,** being thus made to rotate. Magnet **28** is mounted to the impeller at an axial end of central hub **30.**

In the illustrated embodiment, hollow casing **18** comprises a supporting half-shell **34** and a closing element **36** sealingly coupled together and defining cavity **20.**

In the illustrated embodiment, supporting half-shell **34** is shaped substantially as a tray or cup. Preferably, supporting half-shell **34** has a substantially circular section. In particular, supporting half-shell **34** is situated at the top of hollow casing **18.**

In the illustrated embodiment, closing element **36** is thin, being substantially shaped as a foil. Preferably, such closing element **36** consists of a disk. In particular, closing element **36** is situated in an intermediate portion of casing **18.**

Together, supporting half-shell **34** and closing element **36** define cavity **20.** Moreover, supporting half-shell **34** carries inlet **22,** whereas closing element **36** carries outlet **24** at a radially offset position relative to the axis of rotation **X-X** of the impeller.

Supporting half-shell **34** rotatably supports impeller **25.** In particular, supporting half-shell **34** rotatably supports an axial end of central hub **30.**

The following will describe the technical features of the structure of conductivity sensor **14.**

In the illustrated embodiment, conductivity sensor **14** is advantageously situated downstream of flow meter **12.** However, in further implementation variants of the present invention, conductivity sensor **14** may be situated upstream of flow meter **12.**

As will be further described in detail hereinafter, conductivity sensor **14** is integrated with flow meter **12.**

In particular, hollow casing **18** has also a chamber **40** in which conductivity sensor **14** is, advantageously but not necessarily, situated.

In the illustrated embodiment, chamber **40** has, for example, a substantially annular shape, and is intended to receive the flow of liquid directed towards vibration pump **100,** advantageously exiting flow meter **12.** The presence and the technical characteristics of chamber **40** contribute to increasing the dampening effect provided by characteristics of outlet **24** on the pulsation generated by vibration pump **100.**

More in detail, as will be described more specifically hereinafter, chamber **40** is formed by advantageously using a further portion **38** of hollow casing **18,** in addition to the previously described supporting half-shell **34** and closing element **36.**

In the illustrated embodiment, conductivity sensor **14** is advantageously made in accordance with patent publication WO 2016/174569 A1 in the name of the present Applicant. Said patent publication describes the application of a conductivity sensor in order to sense the electric conductivity of the washing bath of a washing machine. Nevertheless, as will be apparent to a person skilled in the art, the same conductivity sensor may also be used for sensing the electric conductivity of the water exiting flow meter **12.**

Preferably, hollow casing **18** further comprises an additional supporting half-shell **48,** and chamber **40** is defined by additional supporting half-shell **48** and by closing element **36.** In particular, additional supporting half-shell **48** is situated at the bottom of hollow casing **18.**

Conductivity sensor **14** comprises a pair of electrodes **42, 44** mounted to the additional supporting half-shell **48** in chamber **40** and configured to stay in contact with the water flow. Moreover, conductivity sensor **14** preferably comprises an electrically insulating supporting covering **46** through which electrodes **42, 44** extend. Furthermore, in the implementation example described herein, conductivity sensor **14** comprises circuit means configured to supply electric energy to electrodes **42, 44** and output conductivity signal **S2** as a function of the potential difference assumed by electrodes **42, 44,** in a *per* se known manner.

As will be apparent to a person skilled in the art, electrodes **42** and **44** may be situated in any position or arrangement within chamber **40.** In the embodiment illustrated herein by way of example, electrodes **42** and **44** are arranged axially, in particular one over the other, with respect to the axis of rotation **X-X** of impeller **25.** In other implementation variants (not shown), electrodes **42** and **44** may, for example, be arranged radially, in particular side by side, with respect to the axis of rotation **X-X** of impeller **25;** this will minimize the total axial dimension of detection device **10.**

Electrodes **42, 44** are situated in the additional supporting half-shell **48** in order to sense the conductivity within additional chamber **40.** In particular, supporting covering **46** that carries electrodes **42, 44** is constrained in additional supporting half-shell **48.**

As an alternative to the above, a single electrode may be employed instead of the pair of electrodes **42, 44,** wherein the potential difference is calculated between the voltage at the single electrode and the ground voltage.

In the illustrated embodiment, flow meter **12** and conductivity sensor **14** are, advantageously, mutually integrated.

In more detail, advantageously, supporting half-shell **38,** closing element **36** and psupporting half-shell **48** are assembled together to form a single enclosure structure (i.e. hollow casing **18)** that encloses the components of flow meter **12** and those of conductivity sensor **14.**

In particular, additional supporting half-shell **48** is shaped substantially like a tray or cup, and is configured to be sealingly coupled to supporting half-shell **34** to define chamber **40.** Preferably, additional supporting half-shell **48** is inserted in supporting half-shell **34,** thereby defining a substantially annular shape of chamber **40.** In the illustrated embodiment, the coupling between supporting half-shell **34** and bottom half-shell **48** is of the snap type, e.g. through the interposition of an annular sealing gasket **49.**

In the illustrated embodiment, closing element **36** is mechanically caught between supporting half-shell **34** and additional supporting half-shell **48,** particularly at its periphery. Preferably, closing element **36** is in abutment with a supporting wall **50** of additional bottom half-shell **48,** in particular being housed in a recess **52** formed on supporting part **50.** In particular, closing element **36** has a plurality of supporting feet **54** protruding into and resting on recess **52.**

Furthermore, the supporting wall **50** is provided with a tip **56** projecting towards cavity **20** and acting as a support for the rotation of impeller **25** about the axis of rotation **X-X.** In particular, hub **30** of impeller **25** is fitted onto tip **56.**

Furthermore, outlet **24** of flow meter **12** opens into chamber **40** in an axial direction relative to the axis of rotation **X-X.** In particular, outlet **24** opens into chamber **40** in a region that is radially offset or spaced apart from the axis of rotation **X-X.** More particularly, outlet **24** opens into additional cavity **40** through a passage **58** formed in supporting wall **50.**

Additional supporting half-shell **48** comprises a central outlet portion **60** that allows water to flow out of annular chamber **40** annularly situated around central outlet portion **60.** Outlet portion **60** has a lateral aperture **62** through which the water can exit the chamber **40.** Moreover, outlet portion **60** is configured to be sealingly connected, by means of a connector **64,** to the inlet of vibration pump **100,** in particular even without the interposition of any flexible tubes.

Preferably, control unit **16** is integrated with flow meter **12** and conductivity sensor **14.**

Control unit **16** comprises a printed circuit board **64** which carries detection means **26** and electrodes **42, 44.** Printed circuit board **64** is mounted to hollow casing **18,** in particular to half-shells **34, 48.** In particular, printed circuit board **64** is partially inserted in a sealed manner in additional cavity **40,** transversally thereto, through additional supporting half-shell **48.** Also, printed circuit board **64** is arranged outside supporting half-shell **34** in a position laterally facing permanent magnet **28.**

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Detection device **(10)** for detecting a flow of liquid in a household appliance; said detection device **(10)** being intended for being connected to and/or integrated with a pump **(100);** said detection device **(10)** comprising a flow meter **(12)** in turn including:
- a hollow casing **(18)** internally having a cavity **(20)** configured to be crossed by said flow of liquid and defined by
a supporting half-shell **(34)** having at least one inlet **(22)** configured to receive said flow of liquid in said cavity **(20),** and
a closing element **(36)** sealingly coupled with said supporting half-shell **(34)** and having at least one outlet **(24)** configured to deliver said flow of liquid outside said cavity **(20);**
- an impeller **(25)** rotatably supported by said hollow casing **(18)** in said cavity **(20)** and configured to be rotatably driven by said flow of liquid around an axis of rotation **(X-X),** and
- detection means **(26)** configured to detect a rotation of the impeller **(25)** and output a flow signal **(S1)** indicative of the rate of said flow of liquid as a function of said rotation of the impeller **(25);** and
wherein said at least one outlet **(24)** is radially spaced apart from the axis of rotation **(X-X)** of said impeller **(25);**
wherein said hollow casing **(18)** further comprises an additional supporting half-shell **(48)** sealingly coupled to the supporting half-shell **(34)**;
wherein said hollow casing **(18)** also has a chamber **(40)** defined by said additional supporting half-shell **(48)** and by the closing element **(36);**
wherein said at least one outlet **(24)** consists of at least one through hole formed in said closing element **(36);**
**characterized in that** said additional supporting half-shell **(48)** comprises a central outlet portion **(60)** that allows said flow of liquid to exit the chamber **(40)** which has an annular shape and is situated around the central outlet portion **(60).**

2. Detection device according to claim **1,** wherein said closing element **(36)** is mechanically caught, in particular at its periphery, between said supporting half-shell **(34)** and said additional supporting half-shell **(48);**

3. Detection device according to claim **1** or **2,** wherein the closing element **(36)** is in abutment with a supporting wall **(50)** of the additional bottom half-shell **(48).**

4. Detection device according to claim **3,** wherein the supporting wall **(50)** is provided with a tip **(56)** projecting towards the cavity **(20)** and acting as a support for the rotation of said impeller **(25)** about the axis of rotation **(X-X)** .

5. Detection device according to any of the preceding claims, wherein said outlet portion **(60)** has a lateral aperture **(62)** through which said flow of liquid can exit the chamber **(40).**

6. Detection device according to any of the preceding claims, wherein said outlet portion **(60)** is configured to be sealingly connected, by means of a connector **(64),** to the inlet of a pump, e.g. a vibration pump **(100),** of a household appliance, in particular in a direct manner and without the interposition of any flexible tubes.

7. Detection device according to any one of the preceding claims, wherein said at least one inlet **(22)** is oriented tangentially relative to said axis of rotation **(X-X).**

8. Detection device according to any one of the preceding claims, wherein said at least one outlet **(24)** is oriented axially relative to said axis of rotation **(X-X).**

9. Detection device according to any one of the preceding claims, wherein the ratio between:
- the total area of the cross-section of said at least one outlet **(24)** relative to the axial direction of said flow of liquid out of the cavity **(20)** and
- the total area of the cross-section of said at least one inlet **(22)** relative to the axial direction of said flow of liquid into the cavity **(20)**
is in the range of 0.36 to 1.96.

10. Detection device according to any one of the preceding claims, wherein the ratio between the diameter of the impeller **(25),** expressed in millimetres, and the number of blades is in the range of 2 to 3.

11. Detection device according to any one of the preceding claims, wherein said impeller **(25)** comprises a permanent magnet **(28)** and said detection means **(26)** are configured to detect the variation occurring in the magnetic field generated by said permanent magnet **(28).**

12. Detection device according to claim **11,** wherein the magnetic poles of said magnet **(28)** are oriented radially relative to said axis of rotation **(X-X).**

13. Detection device according to any one of the preceding claims, further comprising a conductivity sensor **(14)** intended for being crossed by said flow of liquid and configured to output a conductivity signal **(S2)** indicative of the electric conductivity of said flow of liquid.

14. Detection device according to claim **13,** wherein said conductivity sensor **(14)** is hydraulically located downstream of said flow meter **(12).**

15. Detection device according to claim **13** or **14,** wherein said conductivity sensor **(14)** is integrated with said flow meter **(12).**

16. Detection device according to any one of claims **13** to **15,** wherein said conductivity sensor **(14)** is situated in said chamber **(40).**

17. Detection device according to claim **16,** wherein said conductivity sensor **(14)** comprises at least one electrode **(42, 44)** mounted to said additional supporting half-shell **(48)** in said chamber **(40)** and configured to be in contact with said flow of liquid.

18. Detection device according to claim **17,** wherein said conductivity sensor **(14)** further comprises circuit means **(47)** sealingly mounted in said chamber **(40)** and configured to supply electric energy to said at least one electrode **(42, 44)** and output said conductivity signal **(S2)** as a function of the potential difference of said at least one electrode **(42, 44).**

## Patentansprüche

1. Detektionsvorrichtung (10) zum Erfassen eines Flüssigkeitsstroms in einem Haushaltsgerät; wobei die Detektionsvorrichtung (10) dazu bestimmt ist, mit einer Pumpe (100) verbunden und/oder in diese integriert zu werden; wobei die Detektionsvorrichtung (10) einen Durchflussmesser (12) aufweist, der wiederum Folgendes enthält:
- ein hohles Gehäuse (18), das innen einen Hohlraum (20) aufweist, der so konfiguriert ist, dass er von dem Flüssigkeitsstrom durchquert wird, und der definiert ist durch
eine tragende Halbschale (34) mit mindestens einem Einlass (22), der konfiguriert ist, den Flüssigkeitsstrom in dem Hohlraum (20) aufzunehmen, und
ein Verschlusselement (36), das abdichtend mit der tragenden Halbschale (34) gekoppelt ist und mindestens einen Auslass (24) aufweist, der konfiguriert ist, den Flüssigkeitsstrom aus dem Hohlraum (20) abzugeben;
- ein Flügelrad (25), das von dem hohlen Gehäuse (18) in dem Hohlraum (20) drehbar gehalten wird und konfiguriert ist, durch den Flüssigkeitsstrom um eine Drehachse (X-X) drehend angetrieben zu werden, und
- eine Erfassungseinrichtung (26), die konfiguriert ist, eine Drehung des Flügelrads (25) zu erfassen und ein Durchflusssignal (81) auszugeben, das die Rate des Flüssigkeitsstroms als Funktion der Drehung des Flügelrads (25) angibt; und
wobei der mindestens eine Auslass (24) radial von der Drehachse (X-X) des Flügelrads (25) beabstandet ist;
wobei das hohle Gehäuse (18) ferner eine zusätzliche tragende Halbschale (48) aufweist, die abdichtend mit der tragenden Halbschale (34) verbunden ist;
wobei das hohle Gehäuse (18) auch eine Kammer (40) aufweist, die durch die zusätzliche tragende Halbschale (48) und durch das Verschlusselement (36) definiert ist;
wobei der mindestens eine Auslass (24) aus mindestens einem Durchgangsloch besteht, das in dem Verschlusselement (36) ausgebildet ist;
**dadurch gekennzeichnet, dass** die zusätzliche tragende Halbschale (48) einen zentralen Auslassabschnitt (60) aufweist, der es dem Flüssigkeitsstrom ermöglicht, aus der Kammer (40) auszutreten, die eine ringförmige Form aufweist und um den zentralen Auslassabschnitt (60) herum angeordnet ist.

2. Detektionsvorrichtung nach Anspruch 1, wobei das Verschlusselement (36) mechanisch, insbesondere an seinem Umfang, zwischen der tragenden Halbschale (34) und der zusätzlichen tragenden Halbschale (48) gehalten wird.

3. Detektionsvorrichtung nach Anspruch 1 oder 2, wobei das Verschlusselement (36) an einer Stützwand (50) der zusätzlichen unteren tragenden Halbschale (48) anliegt.

4. Detektionsvorrichtung nach Anspruch 3, bei der die Stützwand (50) mit einer Spitze (56) versehen ist, die in Richtung des Hohlraums (20) vorsteht und als Stütze für die Drehung des Flügelrads (25) um die Drehachse (X-X) dient.

5. Detektionsvorrichtung nach einem der vorhergehenden Ansprüche, wobei der Auslassabschnitt (60) eine seitliche Öffnung (62) aufweist, durch die der Flüssigkeitsstrom die Kammer (40) verlassen kann.

6. Detektionsvorrichtung nach einem der vorhergehenden Ansprüche, wobei der Auslassabschnitt (60) konfiguriert ist, mittels eines Verbindungsstücks (64) mit dem Einlass einer Pumpe, z. B. einer Vibrationspumpe (100), eines Haushaltsgeräts abdichtend verbunden zu werden, insbesondere auf direkte Weise und ohne Zwischenschaltung von flexiblen Schläuchen.

7. Detektionsvorrichtung nach einem der vorhergehenden Ansprüche, wobei der mindestens eine Einlass (22) tangential zu der Drehachse (X-X) ausgerichtet ist.

8. Detektionsvorrichtung nach einem der vorhergehenden Ansprüche, wobei der mindestens eine Auslass (24) axial zur Drehachse (X-X) ausgerichtet ist.

9. Detektionsvorrichtung nach einem der vorhergehenden Ansprüche, wobei das Verhältnis zwischen:
- der Gesamtfläche des Querschnitts des mindestens einen Auslasses (24) bezogen auf die axiale Richtung des Flüssigkeitsstroms aus dem Hohlraum (20) und
- der Gesamtfläche des Querschnitts des mindestens einen Einlasses (22), bezogen auf die axiale Richtung des Flüssigkeitsstroms in den Hohlraum (20), im Bereich von 0,36 bis 1,96 liegt.

10. Detektionsvorrichtung nach einem der vorhergehenden Ansprüche, wobei das Verhältnis zwischen dem Durchmesser des Flügelrads (25), ausgedrückt in Millimetern, und der Anzahl der Flügel im Bereich von 2 bis 3 liegt.

11. Detektionsvorrichtung nach einem der vorhergehenden Ansprüche, wobei das Flügelrad (25) einen Permanentmagneten (28) aufweist und die Erfassungseinrichtung (26) konfiguriert ist, die Veränderung des von dem Permanentmagneten (28) erzeugten Magnetfeldes zu erfassen.

12. Detektionsvorrichtung nach Anspruch 11, wobei die Magnetpole des Magneten (28) radial zur Drehachse (X-X) ausgerichtet sind.

13. Detektionsvorrichtung nach einem der vorhergehenden Ansprüche, ferner aufweisend einen Leitfähigkeitssensor (14), der dazu bestimmt ist, von dem Flüssigkeitsstrom durchquert zu werden, und der konfiguriert ist, ein Leitfähigkeitssignal (S2) auszugeben, das die elektrische Leitfähigkeit des Flüssigkeitsstroms anzeigt.

14. Detektionsvorrichtung nach Anspruch 13, wobei der Leitfähigkeitssensor (14) hydraulisch stromabwärts des Durchflussmessers (12) angeordnet ist.

15. Detektionsvorrichtung nach Anspruch 13 oder 14, wobei der Leitfähigkeitssensor (14) mit dem Durchflussmesser (12) integriert ist.

16. Detektionsvorrichtung nach einem der Ansprüche 13 bis 15, wobei der Leitfähigkeitssensor (14) in der Kammer (40) angeordnet ist.

17. Detektionsvorrichtung nach Anspruch 16, wobei der Leitfähigkeitssensor (14) mindestens eine Elektrode (42, 44) aufweist, die an der zusätzlichen stützenden Halbschale (48) in der Kammer (40) angebracht ist und konfiguriert ist, in Kontakt mit dem Flüssigkeitsstrom zu stehen.

18. Detektionsvorrichtung nach Anspruch 17, wobei der Leitfähigkeitssensor (14) ferner eine Schaltungseinrichtung (47) aufweist, die abgedichtet in der Kammer (40) angebracht ist und konfiguriert ist, der mindestens einen Elektrode (42, 44) elektrische Energie zuzuführen und das Leitfähigkeitssignal (S2) als Funktion der Potenzialdifferenz der mindestens einen Elektrode (42, 44) auszugeben.

## Revendications

1. Dispositif de détection (10) pour détecter un écoulement de liquide dans un appareil électroménager ; ledit dispositif de détection (10) étant destiné à être relié et/ou intégré à une pompe (100) ; ledit dispositif de détection (10) comprenant un débitmètre (12) comprenant à son tour :
- un boîtier creux (18) présentant intérieurement une cavité (20) configurée pour être traversée par ledit écoulement de liquide et défini par
une demi-coque de support (34) présentant au moins une entrée(22) configurée pour recevoir ledit écoulement de liquide dans ladite cavité (20), et
un élément de fermeture (36) couplé de manière étanche à ladite demi-coque de support (34) et présentant au moins une sortie (24) configurée pour délivrer ledit écoulement de liquide à l'extérieur de ladite cavité (20) ;
- une turbine (25) supportée en rotation par ladite coque creuse (18) dans ladite cavité (20) et configurée pour être entraînée en rotation par ledit écoulement de liquide autour d'un axe de rotation (X-X), et
- des moyens de détection (26) configurés pour détecter une rotation de la turbine (25) et délivrer en sortie un signal d'écoulement (S1) indicatif du débit dudit écoulement de liquide en fonction de ladite rotation de la turbine (25) ; et
dans lequel ladite au moins une sortie (24) est espacée radialement de l'axe de rotation (X-X) de ladite turbine (25) ;
dans lequel ladite coque creuse (18) présente également une demi-coque de support supplémentaire (48) couplée à étanchéité à la demi-coque de support (34) ;
dans lequel ladite coque creuse (18) présente également une chambre (40) définie par ladite demi-coque de support supplémentaire (48) et par l'élément de fermeture (36) ;
dans lequel ladite au moins une sortie (24) consiste en au moins un trou traversant formé dans lesdits éléments de fermeture (36) ;
**caractérisé en ce que** ladite demi-coque de support supplémentaire (48) comprend une partie de sortie centrale (60) qui permet audit écoulement de liquide de sortir de la chambre (40) qui présente une forme annulaire et est située autour de la partie de sortie centrale (60).

2. Dispositif de détection selon la revendication 1, dans lequel ledit élément de fermeture (36) est accroché mécaniquement, en particulier à sa périphérie, entre ladite demi-coque de support (34) et ladite demi-coque de support supplémentaire (48).

3. Dispositif de détection selon la revendication 1 ou 2, dans lequel l'élément de fermeture (36) vient en butée avec une paroi de support (50) de la demi-coque inférieure supplémentaire (48).

4. Dispositif de détection selon la revendication 3, dans lequel la paroi de support (50) est munie d'une pointe (56) faisant saillie vers la cavité (20) et servant de support à la rotation de ladite turbine (25) autour de l'axe de rotation (X-X).

5. Dispositif de détection selon l'une quelconque des revendications précédentes, dans lequel ladite partie de sortie (60) présente une ouverture latérale (62) à travers laquelle ledit écoulement de liquide peut sortir de la chambre (40).

6. Dispositif de détection selon l'une quelconque des revendications précédentes, dans lequel ladite partie de sortie (60) est configurée pour être connectée de manière étanche, au moyen d'un connecteur (64), à l'entrée d'une pompe, par exemple une pompe à vibrations (100), d'un appareil électroménager, en particulier de manière directe et sans interposition de quelconques tubes flexibles.

7. Dispositif de détection selon l'une quelconque des revendications précédentes, dans lequel ladite au moins une entrée (22) est orientée tangentiellement par rapport audit axe de rotation (X-X).

8. Dispositif de détection selon l'une quelconque des revendications précédentes, dans lequel ladite au moins une sortie (24) est orientée axialement par rapport audit axe de rotation (X-X).

9. Dispositif de détection selon l'une quelconque des revendications précédentes, dans lequel le rapport entre :
- l'aire totale de la section transversale de ladite au moins une sortie (24) par rapport à la direction axiale dudit écoulement de liquide hors de la cavité (20) et
- l'aire totale de la section transversale de ladite au moins une entrée (22) par rapport à la direction axiale dudit écoulement de liquide à l'intérieur de la cavité (20) est dans la plage allant de 0,36 à 1,96.

10. Dispositif de détection selon l'une quelconque des revendications précédentes, dans lequel le rapport entre le diamètre de turbine (25), exprimé en millimètres, et le nombre de pales est dans la plage de 2 à 3.

11. Dispositif de détection selon l'une quelconque des revendications précédentes, dans lequel ladite turbine (25) comprend un aimant permanent (28) et lesdits moyens de détection (26) sont configurés pour détecter la variation se produisant dans le champ magnétique généré par ledit aimant permanent (28).

12. Dispositif de détection selon la revendication 11, dans lequel les pôles magnétiques dudit aimant (28) sont orientés radialement par rapport audit axe de rotation (X-X).

13. Dispositif de détection selon l'une quelconque des revendications précédentes, comprenant en outre un capteur de conductivité (14) destiné à être traversé par ledit écoulement de liquide et configuré pour délivrer en sortie un signal de conductivité (S2) indicatif de la conductivité électrique dudit écoulement de liquide.

14. Dispositif de détection selon la revendication 13, dans lequel ledit capteur de conductivité (14) est situé hy-drauliquement en aval dudit débitmètre (12).

15. Dispositif de détection selon la revendication 13 ou 14, dans lequel ledit capteur de conductivité (14) est intégré audit débitmètre (12).

16. Dispositif de détection selon l'une quelconque des revendications 13 à 15, dans lequel ledit capteur de conductivité (14) est situé dans ladite chambre (40).

17. Dispositif de détection selon la revendication 16, dans lequel ledit capteur de conductivité (14) comprend au moins une électrode (42, 44) montée sur ladite demi-coque de support supplémentaire (48) dans ladite chambre (40) et configurée pour être en contact avec ledit écoulement de liquide.

18. Dispositif de détection selon la revendication 17, dans lequel ledit capteur de conductivité (14) comprend en outre des moyens de circuit (47) montés de manière étanche dans ladite chambre (40) et configurés pour fournir de l'énergie électrique à ladite au moins une électrode (42, 44) et délivrer en sortie ledit signal de conductivité (S2) en fonction de la différence de potentiel de ladite au moins une électrode (42, 44).
